(19) 

**Europäisches Patentamt**
**European Patent Office**
**Office européen des brevets**

(11) **EP 4 206 538 B1**

(12) **EUROPEAN PATENT SPECIFICATION**

(45) Date of publication and mention
of the grant of the patent:
**18.02.2026 Bulletin 2026/08**

(51) International Patent Classification (IPC):
*F23R 3/34* (2006.01)    *F02C 9/28* (2006.01)
*F23R 3/46* (2006.01)

(21) Application number: **21218292.7**

(22) Date of filing: **30.12.2021**

(52) Cooperative Patent Classification (CPC):
**F23R 3/346; F02C 9/28; F23R 3/46;**
F05D 2270/303; F23R 2900/03341

(54) **GAS TURBINE ENGINE WITH SELECTED COMBUSTOR OUTLET TEMPERATURE MEASUREMENTS AND A METHOD OF OPERATING A GAS TURBINE ENGINE**

GASTURBINENMOTOR MIT AUSGEWÄHLTEN BRENNKAMMERAUSTRITTSTEMPERATURMESSUNGEN UND VERFAHREN ZUM BETRIEB EINES GASTURBINENMOTORS

TURBINE À GAZ AVEC MESURES SÉLECTIONNÉES DE LA TEMPÉRATURE DE SORTIE DE LA CHAMBRE DE COMBUSTION ET PROCÉDÉ DE FONCTIONNEMENT D'UNE TURBINE À GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.07.2023 Bulletin 2023/27**

(73) Proprietor: **Ansaldo Energia Switzerland AG**
**5400 Baden (CH)**

(72) Inventors:
• **GRANET, Victor**
**5400 BADEN (CH)**
• **SIERRA SANCHEZ, Patricia**
**5400 BADEN (CH)**
• **CANELLA, Alberto**
**5400 BADEN (CH)**

(74) Representative: **Studio Torta S.p.A.**
**Corso Magenta, 56**
**20123 Milano (IT)**

(56) References cited:
**US-A- 4 058 975      US-A1- 2014 144 156**
**US-A1- 2017 138 273      US-A1- 2017 211 487**

**Description**

TECHNICAL FIELD

The present invention relates to a gas turbine engine with selected outlet temperature measurements and to a method of operating a gas turbine engine.

BACKGROUND

As known, temperature of hot gas flowing through gas flow path is an important parameter in control of gas turbine engines. Despite adverse conditions, sensors for measuring temperature are available and may be arranged at various locations along the flow path as required.

Gas turbine engine operation is normally controlled using, among other quantities, also an average hot gas temperature to determine a set-point. However, ageing of the gas turbine engine and stressing events such as trips and fast transients may lead to degradation of the gas turbine engine to some extent. In turn, degradation over time requires adjustment of the operation parameters of the gas turbine engine, because the spread of the sensors measurements around the target average value increases. The problem is made worse in case the sensors become less reliable. Especially in can combustor gas turbine engines, the increased spread and parameter adjustment may cause some can combustors to drift towards operation at colder conditions, reducing the margin to the combustion dynamics and lean blow off limits, while some other can combustors may shift towards operation at higher temperature, thus increasing NOx emissions and effectively reducing the existing operational window over the whole load range.

Tight control of can-to-can scatter during manufacturing prevents the can combustors from departing too far from the average and thus deteriorating the engine operation. This solution is effective when the can combustors are new and clean, but, as deterioration becomes appreciable, tight can-to-can scatter may not prove sufficient to ensure efficient operation once the cans are installed in an engine and have been in use for some time.

US 2014/0144156 A1 discloses gas turbine engine comprising a combustor assembly, having a plurality of combustor units of a can type, and a control system comprising a control unit. Each combustor unit comprises: a first-stage combustor and a second-stage combustor, that define a hot gas path; a mixer, arranged along the hot gas path between the first-stage combustor and the second-stage combustor; a first temperature sensor configured to provide respective first temperature measurements of hot gas flowing through the mixer of the respective combustor unit at a respective first location; and a second temperature sensor configured to provide respective second temperature measurements of hot gas flowing through the mixer of the respective combustor unit at a respective second location. The control unit calculates a first average temperature of a first set of the first temperature measurements and a second average temperature of a second set of the second temperature measurements and determines a MET command as a function of the first and second average temperatures.

SUMMARY OF THE INVENTION

It is thus an object of the present invention to provide a gas turbine engine and a method of operating a gas turbine that allow to overcome or at least attenuate the above described limitations.

According to the present invention, there is provided a gas turbine engine comprising:

a combustor assembly having a plurality of combustor units of a can type; and
a control system;
wherein each combustor unit comprises:

a first-stage combustor and a second-stage combustor, that define a hot gas path;
a mixer, arranged along the hot gas path between the first-stage combustor and the second-stage combustor;
a first temperature sensor configured to provide respective first temperature measurements of hot gas flowing through the mixer of the respective combustor unit at a respective first location; and
a second temperature sensor configured to provide respective second temperature measurements of hot gas flowing through the mixer of the respective combustor unit at a respective second location;
wherein the control unit is configured to calculate a first average temperature of a first set of the first temperature measurements and a second average temperature of a second set of the second temperature measurements and to determine a mixer exit temperature command as a function of the first average temperature and of the second average temperature;
characterized in that highest first temperature measurements and lowest first temperature measurements are excluded from the first set and highest second temperature measurements and lowest second temperature measurements are excluded from the second set;
and in that, in each combustor unit, the first temperature sensor and the second temperature sensor are at an outlet of the mixer.

The selection and combination of intermediate measurement avoids that control of the gas turbine engine is affected by combustor units operating in extreme (hot or cold) temperature conditions due to cumulated operation time and ageing or by malfunctioning of some temperature sensors. Drift in operation temperature of individual combustors units (specifically, first-stage combustors), in fact, would be included in the overall average and introduce a bias in control of the gas turbine engine. In turn, inaccurate control may strengthen operation in non-optimal conditions and lead to exceed admissible level of pollutant emissions, decay in performance, high combustion dynamics and also to lean blow off for certain combustor units. Exclusion of highest and lowest temperature measurements reduces dependency on unpredictable changes, including time and intensity of drift of combustor units or malfunctioning of components such as thermocouples.

According to the present invention, there is also provided a method of operating a gas turbine comprising a combustor assembly, having a plurality of combustor units of a can type, wherein each combustor unit comprises a first-stage combustor and a second-stage combustor, that define a hot gas path, and a mixer, arranged along the hot gas path between the first-stage combustor and the second-stage combustor;
the method comprising:

sensing first temperatures of hot gas flowing through the mixer of each combustor unit at a respective first location;
sensing second temperatures of hot gas flowing through the mixer of each combustor unit at a respective second location;
calculating a first average temperature of a first set of the first temperature measurements and a second average temperature of a second set of the second temperature measurements; and
determining a mixer exit temperature command as a function of the first average temperature and of the second average temperature;
characterized in that highest first temperature measurements and lowest first temperature measurements are excluded from the first set and highest second temperature measurements and lowest second temperature measurements are excluded from the second set;
and in that, in each combustor unit, the first temperature sensor and the second temperature sensor are at an outlet of the mixer.

BRIEF DESCRIPTION OF THE DRAWINGS

The present invention will now be described with reference to the accompanying drawings, which illustrate some non-limitative embodiments thereof, in which:

-   figure 1 is a simplified block diagram of a gas turbine engine in accordance with an embodiment of the present invention;

-   figure 2 is a schematic front view of a combustor assembly of the gas turbine engine of figure 1, made in accordance with an embodiment of the present invention;

-   figure 3 is a cross-sectional lateral view of a combustor unit of the combustor assembly of figure 2, cut along the line III-III of figure 2;

-   figure 4 is a cross-sectional front view of a mixer of the combustor unit figure 3, cut along the line IV-IV of figure 3;

-   figure 5 is a more detailed block diagram of component of the gas turbine engine of figure 1; and

-   figure 6 e 7 are graphs showing quantities used in the gas turbine engine of figure 1.

DETAILED DESCRIPTION OF EXEMPLARY EMBODIMENTS

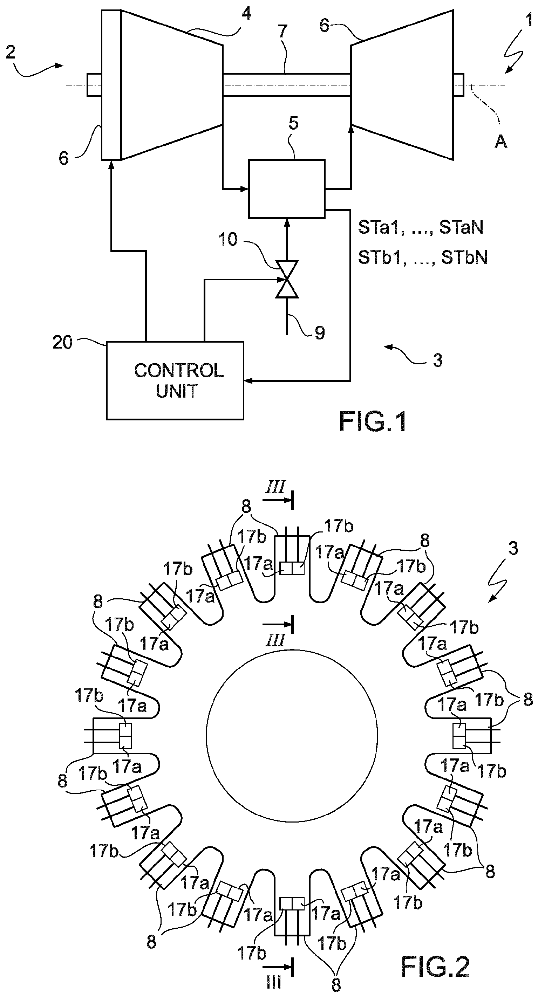

In Figure 1, number 1 defines a gas turbine plant as a whole comprising a gas turbine engine 2 and a control system 3. The gas turbine engine 2, in turn, comprises a compressor 4, a combustor assembly 5 and an expansion section or turbine 6, all extending about an axis A. The compressor 4 and the turbine 6 share a common rotor 7.

The compressor 4 feeds the combustor assembly 5 with an airflow drawn from outside. Air supply to the compressor 4 is controllable by the control system 3 by adjusting orientation of inlet guide vanes 6 of the compressor 4.

The combustor assembly 5 mixes air from the compressor 4 and fuel from a fuel supply line 9 to form a mixture for combustion. The fuel may be gaseous, for example natural gas or syngas, or liquid, for example gasoil. The gas turbine engine 2 can be structured to use different types of fuel, both gaseous and liquid. Fuel supply is controllable by the control system 3 through a fuel valve system 10.

The turbine 6 receives and expands a flow of hot gas from the combustor assembly 5 to extract mechanical work, which is transferred to an external user, typically an electric generator, here not shown.

The combustor assembly 5 is a two-stage or sequential can combustor and is provided with a plurality of combustor units 8 of a can type, which are circumferentially distributed about the axis A, as schematically illustrated in figure 2.

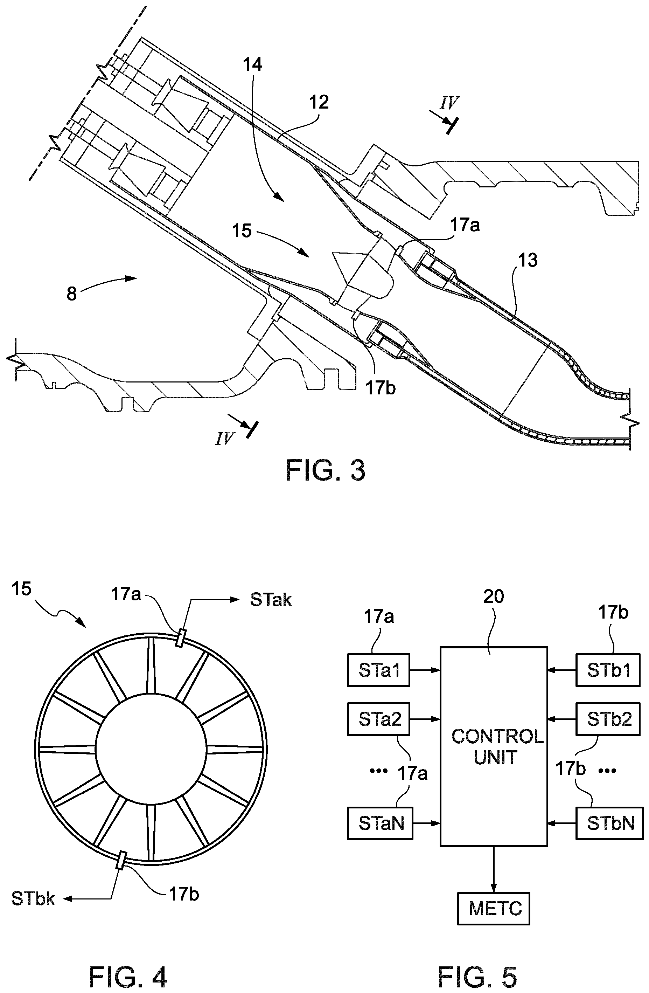

One of the combustor units 8 is shown in greater detail in figure 3 and comprises a first-stage combustor 12 and a second (or sequential) combustor 13, that define a hot gas path 14. The combustor unit 8 also comprises a mixer 15, arranged along the hot gas path 14 between the first-stage combustor 12 and the second-stage combustor 13. The mixer 15 is configured to add dilution air and/or fuel to hot gas flowing from the first-stage combustor 12 in the hot gas path, in accordance with design preferences.

A first temperature sensor 17a and a second temperature sensor 17b are arranged in the hot gas path 14 at the mixer and are configured to sense respective temperatures of hot gas flowing around. In one embodiment, the first temperature sensor 17a and the second temperature sensor 17b may be thermocouples in use in contact with hot gas flowing through the mixer 15 and are arranged at a same axial location at an outer boundary of the hot gas path 14 and are diametrally opposite to each other, respectively. Other arrangements of the first temperature sensor 17a and the second temperature sensor 17b may selected both for axial and angular positions, however, in accordance with design preferences. For example, the first temperature sensor 17a and the second temperature sensor 17b may be placed at any angular location on the periphery of a mixer exit plane at the same axial location. Specific angular locations may be selected based on configurations of the first-stage combustor 12 and of the mixer 15.

The first temperature sensors 17a provide respective first temperature measurements $ST1a, ..., STNa$ and the second temperature sensors 17b provide respective second temperature measurements $ST1b, ..., STNb$, N being a number of combustors units 8.

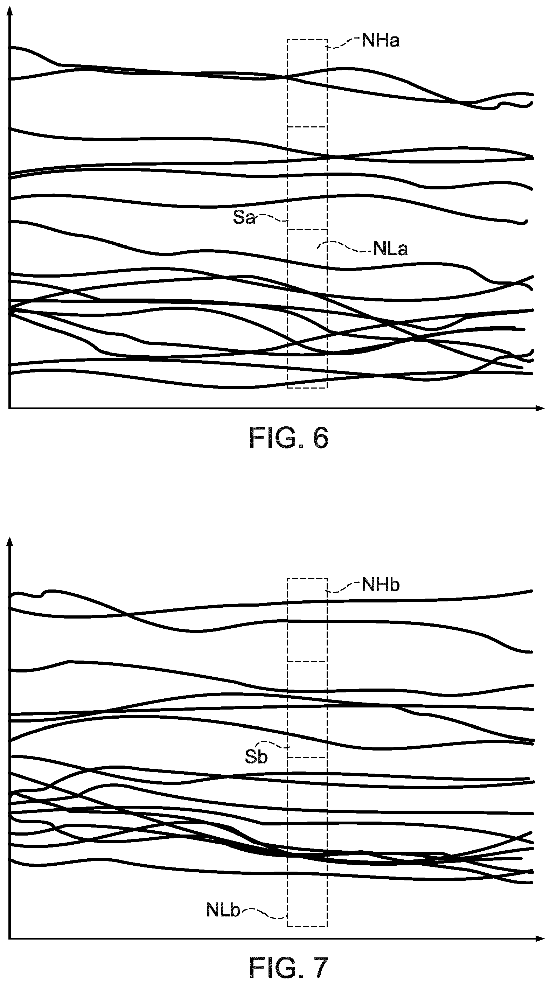

The control system 3 (figure 5) comprises a control unit 20 configured to determine a mixer exit temperature command METC for the gas turbine engine 1 based on the first temperature measurements $ST1a, ..., STNa$ and the second temperature measurements $ST1b, ..., STNb$. The control unit 20 receives the first temperature measurements $ST1a, ..., STNa$ and the second temperature measurements $ST1b, ..., STNb$ and selects a first set Sa of intermediate first temperature measurements $ST1a, ..., STNa$ and a second set Sb of intermediate second temperature measurements $ST1b, ..., STNb$ and determines the mixer exit temperature command METC based on a combination of the selected first temperature measurements $ST1a, ..., STNa$ and second temperature measurements $ST1b, ..., STNb$. Specifically, the control unit 20 excludes the highest and the lowest first temperature measurements $ST1a, ..., STNa$ and second temperature measurements $ST1b, ..., STNb$ and includes the remaining intermediate first temperature measurements $ST1a, ..., STNa$ in the first set Sa and the remaining intermediate second temperature measurements $ST1b, ..., STNb$ in the second set Sb. More precisely, a first number NHa of highest first temperature measurements $ST1a, ..., STNa$ and a second number NLa of lowest first temperature measurements $ST1a, ..., STNa$ are excluded from the first set Sa (figure 6) and a third number NHb of highest second temperature measurements $ST1b, ..., STNb$ and a fourth number NLb of lowest second temperature measurements $ST1b, ..., STNb$ are excluded from the second set Sb (figure 7).

In one embodiment, for example, the third highest to the sixth highest first temperature measurements $ST1a, ..., STNa$ and second temperature measurements $ST1b, ..., STNb$ are included in the first group Sa and in the second group Sb, respectively; the two highest first temperature measurements $ST1a, ..., STNa$ and second temperature measurements $ST1b, ..., STNb$ and the lowest first temperature measurements $ST1a, ..., STNa$ and second temperature measurements $ST1b, ..., STNb$. i.e. lower than the sixth highest, are excluded from the first group Sa and second group Sb.

The first temperature measurements $ST1a, ..., STNa$ of the first set Sa and the second temperature measurements $ST1b, ..., STNb$ of the second set Sb need not be symmetrically selected with respect to the extreme first temperature measurements $ST1a, ..., STNa$ and the second temperature measurements $ST1b, ..., STNb$, respectively. Also, the first group Sa and the second group Sb need not contain the same number of first temperature measurements $ST1a, ..., STNa$ and second temperature measurements $ST1b, ..., STNb$ and/or first temperature measurements $ST1a, ..., STNa$ and second temperature measurements $ST1b, ..., STNb$ of corresponding position when ordered form the highest to the lowest. In one embodiment, for example, the third highest to the sixth highest first temperature measurements $ST1a, ..., STNa$ are included in the first group Sa and the fourth highest to the eight highest first temperature measurements $ST1a, ..., STNa$ are included in the second group Sb.

Then, the control unit 20 calculates a first average temperature METa of the first temperature measurements $ST1a, ..., STNa$ of the first set Sa; and a second average temperature METb of the second temperature measurements $ST1b, ..., STNb$ obtained from the second set Sb. Finally, the control unit 20 determines the mixer exit temperature command METC as a function of the first average temperature METa and of the second average temperature METb. In one embodiment, the mixer exit temperature command METC is defined as:

$$METC = K1 + K2*METa + K3*METb$$

where K1, K2 and K3 are calibration coefficients.

The mixer exit temperature command METC is used by the control system 3 to control the gas turbine engine 1, e.g. by determining a set-point of the gas turbine engine 1 and by controlling fuel and/or air supply to the combustor units 8 of the combustor assembly 3.

In one embodiment, the control unit 20 is configured to allow modification of the criteria for selecting the first temperature measurements $ST1a, ..., STNa$ and second temperature measurements $ST1b, ..., STNb$ to be included in the first set Sa and second set Sb, respectively. For example, the control unit 20 allows to modify the first number NHa of highest first temperature measurements $ST1a, ..., STNa$, the second number NLa of lowest first temperature measurements $ST1a, ..., STNa$, the third number NHb of highest second temperature measurements $ST1b, ..., STNb$ and the fourth number NLb of lowest second temperature measurements ST1b, ..., STNb, thus modifying the composition of the first set Sa and of the second set Sb.

The process of identifying the highest and lowest temperature measurements may be iteratively carried out by the control unit 5 during operation of the gas turbine engine 1 at every reading from the first temperature sensor 17a and second temperature sensor 17b or by averaging each first temperature measurement ST1a, ..., STNa and second temperature measurement ST1b, ..., STNb over a test interval. In the latter case, the composition of the first set Sa and of the second set Sb used to determine the first average temperature METa, the second average temperature METb and the mixer exit temperature command METC remains unchanged between test intervals.

It is finally apparent that changes and variations may be made to the gas turbine and method described and illustrated without departing from the scope of protection of the accompanying claims.

**Claims**

1. A gas turbine engine comprising:

   a combustor assembly (5) having a plurality of combustor units (8) of a can type; and
   a control system (3) comprising a control unit (20);
   wherein each combustor unit (8) comprises:

   a first-stage combustor (12) and a second-stage combustor (13), that define a hot gas path (14);
   a mixer (15), arranged along the hot gas path (14) between the first-stage combustor (12) and the second-stage combustor (13);
   a first temperature sensor (17a) configured to provide respective first temperature measurements (STIa, ..., STNa) of hot gas flowing through the mixer (15) of the respective combustor unit (8) at a respective first location; and
   a second temperature sensor (17b) configured to provide respective second temperature measurements (ST1b, ..., STNb) of hot gas flowing through the mixer (15) of the respective combustor unit (8) at a respective second location; and
   wherein the control unit (20) is configured to calculate a first average temperature (METa) of a first set (Sa) of the first temperature measurements (STIa, ..., STNa) and a second average temperature (METb) of a second set (Sb) of the second temperature measurements (ST1b, ..., STNb) and to determine a mixer exit temperature command (METC) as a function of the first average temperature (METa) and of the second average temperature (METb);
**characterized in that** highest first temperature measurements (STIa, ..., STNa) and lowest first temperature measurements (STIa, ..., STNa) are excluded from the first set (Sa) and highest second temperature measurements (ST1b, ..., STNb) and lowest second temperature measurements (ST1b, ..., STNb) are excluded from the second set (Sb);
and **in that**, in each combustor unit (8), the first temperature sensor (17a) and the second temperature sensor (17b) are at an outlet of the mixer (15).

2. The gas turbine engine according to claim 1, wherein the control unit (20) is configured to exclude a first number (NHa) of the highest first temperature measurements (STIa, ..., STNa) and a second number (NLa) of the lowest first temperature measurements (STIa, ..., STNa) from the first set (Sa) and to exclude a third number (NHb) of the highest second temperature measurements (ST1b, ..., STNb) and a fourth number (NLb) of the lowest second temperature measurements (ST1b, ..., STNb) from the second set (Sb).

3. The gas turbine engine according to claim 2, wherein the first number (NHa) of the highest first temperature measurements (STIa, ..., STNa) is equal to the third number (NHb) of the highest second temperature measurements (ST1b, ..., STNb) and the second number (NLa) of the lowest first temperature measurements (STIa, ..., STNa) is equal to the fourth number (NLb) of the lowest second temperature measurements (ST1b, ..., STNb).

4. The gas turbine engine according to any one of the preceding claims, wherein the control unit (20) is configured to determine the exit temperature command (METC) as:

$$METC = K1 + K2*METa + K3*METb$$

   where METC is the exit temperature command, METa is the first average temperature, METb is the second average temperature and K1, K2 and K3 are calibration coefficients.

5. The gas turbine engine according to any one of the preceding claims, wherein the control system (3) is configured to control fuel and/or air supply to the combustor units (8) based on the exit temperature command (METC).

6. The gas turbine engine according to any one of the preceding claims, wherein, in each combustor unit (8), the first location of the first temperature sensor (17a) and the second location of the second temperature sensor (17b) include a first angular location and a second angular location, respectively, and preferably the first angular location is diametrally opposite to the second angular location.

7. The gas turbine engine according to any one of the preceding claims, wherein, in each combustor unit (8), the first temperature sensor (17a) and the second temperature sensor (17b) include respective thermocouples in use in contact with hot gas flowing through the mixer (15).

8. A method of operating a gas turbine engine comprising a combustor assembly (5), having a plurality of combustor units (8) of a can type, wherein each combustor unit (8) comprises a first-stage combustor (12) and a second-stage combustor (13), that define a hot gas path (14), and a mixer (15), arranged along the hot gas path (14) between the first-stage combustor (12) and the second-stage combustor (13); the method comprising:

sensing first temperatures (STla, ..., STNa) of hot gas flowing through the mixer (15) of each combustor unit (8) at a respective first location (17a);
sensing second temperatures (ST1b, ..., STNb) of hot gas flowing through the mixer (15) of each combustor unit (8) at a respective second location (17b);
calculating a first average temperature (METa) of a first set (Sa) of the first temperature measurements (STla, ..., STNa) and a second average temperature (METb) of a second set (Sb) of the second temperature measurements (ST1b, ..., STNb); and
determining a mixer exit temperature command (METC) as a function of the first average temperature (METa) and of the second average temperature (METb);
**characterized in that** highest first temperature measurements (STla, ..., STNa) and lowest first temperature measurements (STla, ..., STNa) are excluded from the first set (Sa) and highest second temperature measurements (ST1b, ..., STNb) and lowest second temperature measurements (ST1b, ..., STNb) are excluded from the second set (Sb);
and **in that**, in each combustor unit (8), the first temperature sensor (17a) and the second temperature sensor (17b) are at an outlet of the mixer (15).

9. The method according to claim 8, comprising excluding a first number (NHa) of the highest first temperature measurements (STla, ..., STNa) and a second number (NLa) of the lowest first temperature measurements (STla, ..., STNa) from the first set (Sa) and excluding a third number (NHb) of the highest second temperature measurements (ST1b, ..., STNb) and a fourth number (NLb) of the lowest second temperature measurements (ST1b, ..., STNb) from the second set (Sb).

10. The method according to claim 9, wherein the first number (NHa) of the highest first temperature measurements (STla, ..., STNa) is equal to the third number (NHb) of the highest second temperature measurements (ST1b, ..., STNb) and the second number (NLa) of the lowest first temperature measurements (STla, ..., STNa) is equal to the fourth number (NLb) of the lowest second temperature measurements (ST1b, ..., STNb).

11. The method according to any one of claims 8 to 10, wherein the exit temperature command (METC) is determined as:

$$METC = K1 + K2*METa + K3*METb$$

where METC is the exit temperature command, METa is the first average temperature, METb is the second average temperature and K1, K2 and K3 are calibration coefficients.

12. The method according to any one of claims 8 to 11, wherein, in each combustor unit (8), the first location of the first temperature sensor (17a) and the second location of the second temperature sensor (17b) include a first angular location and a second angular location, respectively, and preferably the first angular location is diametrally opposite to the second angular location.

**Patentansprüche**

1. Gasturbine, aufweisend:

eine Brennkammeranordnung (5), die eine Mehrzahl an Rohr-Brennkammereinheiten (8) hat; und
ein Steuersystem (3), das eine Steuereinheit (20) aufweist;
wobei jede Brennkammereinheit (8) aufweist:

eine Erststufen-Brennkammer (12) und eine Zweitstufen-Brennkammer (13), die einen Heißgaspfad (14) definieren;
einen Mischer (15), der entlang des Heißgaspfads (14) zwischen der Erststufen-Brennkammer (12) und der Zweitstufen-Brennkammer (13) angeordnet ist;
einen ersten Temperatursensor (17a), der dazu konfiguriert ist, jeweilige erste Temperaturmessungen (STla, ..., STNa) eines durch den Mischer (15) der jeweiligen Brennkammereinheit (8) strömenden Heißgases an einem jeweiligen ersten Ort zu liefern; und
einen zweiten Temperatursensor (17b), der dazu konfiguriert ist, jeweilige zweite Temperaturmessungen (ST1b, ..., STNb) eines durch den Mischer (15) der jeweiligen Brennkammereinheit (8) strömenden Heißgases an einem jeweiligen zweiten Ort zu liefern; und
wobei die Steuereinheit (20) dazu konfiguriert ist, eine erste Durchschnittstemperatur (METa) einer ersten Menge (Sa) der ersten Temperaturmessungen (STla, ..., STNa) und
eine zweite Durchschnittstemperatur (METb) einer zweiten Menge (Sb) der zweiten Temperaturmessungen (ST1b, ..., STNb) zu berechnen und einen Mischer-AustrittstemperaturBefehl (METC) als eine Funktion der ersten Durchschnittstemperatur (METa) und der zweiten Durchschnittstemperatur (METb) zu bestimmen;
**dadurch gekennzeichnet, dass** höchste erste Temperaturmessungen (STla, ..., STNa) und niedrigste erste Temperaturmessungen (STla, ..., STNa) aus der ersten Menge (Sa) ausgeschlossen werden und höchste zweite Temperaturmessungen (ST1b, ..., STNb) und niedrigste zweite Temperaturmessungen (ST1b, ..., STNb) aus der zweiten Menge (Sb) ausgeschlossen werden;
und dass in jeder Brennkammereinheit (8) der erste Temperatursensor (17a) und der zweite Temperatursensor (17b) an einem Auslass des Mischers (15) sind.

2. Gasturbine gemäß Anspruch 1, wobei die Steuereinheit (20) dazu konfiguriert ist, eine erste Anzahl (NHa) der höchsten ersten Temperaturmessungen (STla, ..., STNa) und eine zweite Anzahl (NLa) der niedrigsten ersten Temperaturmessungen (STla, ..., STNa) aus der ersten Menge (Sa) auszuschließen und eine dritte Anzahl (NHb) der höchsten zweiten Temperaturmessungen (ST1b, ..., STNb) und eine vierte Anzahl (NLb) der niedrigsten zweiten Temperaturmessungen (ST1b, ..., STNb) aus der zweiten Menge (Sb) auszuschließen.

3. Gasturbine gemäß Anspruch 2, wobei die erste Anzahl (NHa) der höchsten ersten Temperaturmessungen (STla, ..., STNa) gleich der dritten Anzahl (NHb) der höchsten zweiten Temperaturmessungen (ST1b, ..., STNb) ist und die zweite Anzahl (NLa) der niedrigsten ersten Temperaturmessungen (STla, ..., STNa) gleich der vierten Anzahl (NLb) der niedrigsten zweiten Temperaturmessungen (ST1b, ..., STNb) ist.

4. Gasturbine gemäß einem der vorhergehenden Ansprüche, wobei die Steuereinheit (20) dazu konfiguriert ist, den Austrittstemperaturbefehl (METC) wie folgt zu bestimmen:

$$METC = K1 + K2*METa + K3*METb$$

wobei METC der Austrittstemperaturbefehl ist, METa die erste Durchschnittstemperatur ist, METb die zweite Durchschnittstemperatur ist und K1, K2 und K3 Kalibrierungskoeffizienten sind.

5. Gasturbine gemäß einem der vorhergehenden Ansprüche, wobei das Steuersystem (3) dazu konfiguriert ist, auf Basis des Austrittstemperaturbefehls (METC) eine Brennstoff- und/oder Luftzufuhr an die Brennkammereinheiten (8) zu steuern.

6. Gasturbine gemäß einem der vorhergehenden Ansprüche, wobei in jeder Brennkammereinheit (8) der erste Ort des ersten Temperatursensors (17a) und der zweite Ort des zweiten Temperatursensors (17b) einen ersten Winkelort bzw. einen zweiten Winkelort aufweisen und vorzugsweise der erste Winkelort dem zweiten Winkelort diametral gegenüberliegt.

7. Gasturbine gemäß einem der vorhergehenden Ansprüche, wobei in jeder Brennkammereinheit (8) der erste Temperatursensor (17a) und der zweite Temperatursensor (17b) jeweils Thermoelemente in der Verwendung in Kontakt mit einem durch den Mischer (15) strömenden Heißgas aufweist.

8. Verfahren zum Betreiben einer Gasturbine, aufweisend eine Brennkammeranordnung (5) die eine Mehrzahl an Rohr-Brennkammereinheiten (8) hat, wobei jede Brennkammereinheit eine Erststufen-Brennkammer (12) und eine Zweitstufen-Brennkammer (13), die einen Heißgaspfad (14) definieren, und einen Mischer (15) aufweist, der entlang des Heißgaspfads (14) zwischen der Erststufen-Brennkammer (12) und der Zweitstufen-Brennkammer (13) angeordnet ist;
wobei das Verfahren beinhaltet:

Erfassen erster Temperaturen (STla, ..., STNa) eines durch den Mischer (15) einer jeden Brennkammereinheit (8) strömenden Heißgases an einem jeweiligen ersten Ort (17a);
Erfassen zweiter Temperaturen (ST1b, ..., STNb) eines durch den Mischer (15) einer jeden Brennkammereinheit (8) strömenden Heißgases an einem jeweiligen zweiten Ort (17b); Berechnen einer ersten Durchschnittstemperatur (METa) einer ersten Menge (Sa) der ersten Temperaturmessungen (STla, ..., STNa) und einer zweiten Durchschnittstemperatur (METb) einer zweiten Menge (Sb) der zweiten Temperaturmessungen (ST1b, ..., STNb); und Bestimmen eines Mischer-Austrittstemperatur-Befehls (METC) als eine Funktion der ersten Durchschnittstemperatur (METa) und der zweiten Durchschnittstemperatur (METb); **dadurch gekennzeichnet, dass** höchste erste Temperaturmessungen (STla, ..., STNa) und niedrigste erste Temperaturmessungen (STla, ..., STNa) aus der ersten Menge (Sa) ausgeschlossen werden und höchste zweite Temperaturmessungen (ST1b, ..., STNb) und niedrigste zweite Temperaturmessungen (ST1b, ..., STNb) aus der zweiten Menge (Sb) ausgeschlossen werden; und dass in jeder Brennkammereinheit (8) der erste Temperatursensor (17a) und der zweite Temperatursensor (17b) an einem Auslass des Mischers (15) sind.

9. Verfahren gemäß Anspruch 8, aufweisend Ausschließen einer ersten Anzahl (NHa) der höchsten ersten Temperaturmessungen (STla, ..., STNa) und einer zweiten Anzahl (NLa) der niedrigsten ersten Temperaturmessungen (STla, ..., STNa) aus der ersten Menge (Sa) und Ausschließen einer dritten Anzahl (NHb) der höchsten zweiten Temperaturmessungen (ST1b, ..., STNb) und einer vierten Anzahl (NLb) der niedrigsten zweiten Temperaturmessungen (ST1b, ..., STNb) aus der zweiten Menge (Sb).

10. Verfahren gemäß Anspruch 9, wobei die erste Anzahl (NHa) der höchsten ersten Temperaturmessungen (STla, ..., STNa) gleich der dritten Anzahl (NHb) der höchsten zweiten Temperaturmessungen (ST1b, ..., STNb) ist und die zweite Anzahl (NLa) der niedrigsten ersten Temperaturmessungen (STla, ..., STNa) gleich der vierten Anzahl (NLb) der niedrigsten zweiten Temperaturmessungen (ST1b, ..., STNb) ist.

11. Verfahren gemäß einem der Ansprüche 8 bis 10, wobei der Austrittstemperaturbefehl (METC) wie folgt bestimmt wird:

$$METC = K1 + K2*METa + K3*METb$$

wobei METC der Austrittstemperaturbefehl ist, METa die erste Durchschnittstemperatur ist, METb die zweite Durchschnittstemperatur ist und K1, K2 und K3 Kalibrierungskoeffizienten sind.

12. Verfahren gemäß einem der Ansprüche 8 bis 11, wobei in jeder Brennkammereinheit (8) der erste Ort des ersten Temperatursensors (17a) und der zweite Ort des zweiten Temperatursensors (17b) einen ersten Winkelort bzw. einen zweiten Winkelort aufweisen und vorzugsweise der erste Winkelort dem zweiten Winkelort diametral gegenüberliegt.

## Revendications

1. Turbine à gaz comprenant :

un ensemble de chambre de combustion (5) ayant une pluralité d'unités de chambres de combustion (8) tubulaires ; et un système de commande (3) comprenant une unité de commande (20) ; dans laquelle chaque unité de chambre de combustion (8) comprend :

une chambre de combustion de premier étage (12) et une chambre de combustion de deuxième étage (13), qui définissent un trajet de gaz chaud (14) ; un mélangeur (15), prévu le long du trajet de gaz chaud (14) entre la chambre de combustion de premier étage (12) et la chambre de combustion de deuxième étage (13) ; un premier capteur de température (17a) configuré pour fournir des premières mesures de températures respectives (ST1a, ..., STNa) du gaz chaud qui circule à travers le mélangeur (15) de l'unité de chambre de combustion respective (8) à un premier emplacement respectif ; et un deuxième capteur de température (17b) configuré pour fournir des deuxièmes mesures de température respectives (ST1b, ..., STNb) du gaz chaud qui circule à travers le mélangeur (15) de l'unité de chambre de combustion respective (8) à un deuxième emplacement respectif ; et dans laquelle l'unité de commande (20) est configurée pour calculer une première température moyenne (METa) d'un premier groupe (Sa) des premières mesures de température (ST1a, ..., STNa) et une deuxième température moyenne (METb) d'un deuxième groupe (Sb) des deuxièmes mesures de température (ST1b, ..., STNb) et pour déterminer une commande de température de sortie de mélangeur (METC) en fonction de la première température moyenne (METa) et de la deuxième température moyenne (METb) ; **caractérisée en ce que** les premières mesures de température les plus élevées (ST1a, ..., STNa) et les premières mesures de température les plus basses (ST1a, ..., STNa) sont exclues du premier groupe (Sa) et les deuxièmes mesures de température les plus élevées (ST1b, ..., STNb) et les deuxièmes mesures de température les plus basses (ST1b, ..., STNb) sont exclues du deuxième groupe (Sb) ;

et **en ce que**, dans chaque unité de chambre de combustion (8), le premier capteur de température (17a) et le deuxième capteur de température (17b) se trouvent au niveau d'une sortie du mélangeur (15).

2. Turbine à gaz selon la revendication 1, dans laquelle l'unité de commande (20) est configurée pour exclure un premier nombre (NHa) des premières mesures de température les plus élevées (ST1a, ..., STNa) et un deuxième nombre (NLa) des premières mesures de température les plus basses (ST1a, ..., STNa) du premier groupe (Sa) et pour exclure un troisième nombre (NHb) des deuxièmes mesures de température les plus élevées (ST1b, ..., STNb) et un quatrième nombre (NLb) des deuxièmes mesures de température les plus basses (ST1b, ..., STNb) du deuxième groupe (Sb).

3. Turbine à gaz selon la revendication 2, dans laquelle le premier nombre (NHa) des premières mesures de température les plus élevées (ST1a, ..., STNa) est égal au troisième nombre (NHb) des deuxièmes mesures de température les plus élevées (ST1b, ..., STNb) et le deuxième nombre (NLa) des premières mesures de température les plus basses (ST1a, ..., STNa) est égal au quatrième nombre (NLb) des deuxièmes mesures de température les plus basses (ST1b, ..., STNb).

4. Turbine à gaz selon l'une quelconque des revendications précédentes, dans laquelle l'unité de commande (20) est configurée pour déterminer la commande de température de sortie (METC) comme :

$$METC = K1 + K2 \ast META + K3 \ast METb$$

où METC est la commande de température de sortie, META est la première température moyenne, METb est la deuxième température moyenne et K1, K2 et K3 sont des coefficients de calibrage.

5. Turbine à gaz selon l'une quelconque des revendications précédentes, dans laquelle le système de commande (3) est configuré pour contrôler l'alimentation en combustible et/ou en air des unités de chambres de combustion (8) sur la base de la commande de température de sortie (METC).

6. Turbine à gaz selon l'une quelconque des revendications précédentes, dans laquelle, dans chaque unité de chambre de combustion (8), le premier emplacement du premier capteur de température (17a) et le deuxième emplacement du deuxième capteur de température (17b) comportent un premier emplacement angulaire et un deuxième emplacement angulaire, respectivement, et, de préférence, le premier emplacement angulaire est diamétralement opposé au deuxième emplacement angulaire.

7. Turbine à gaz selon l'une quelconque des revendications précédentes, dans laquelle, dans chaque unité de chambre de combustion (8), le premier capteur de température (17a) et le deuxième capteur de température (17b) comportent des thermocouples respectifs utilisés en contact avec le gaz chaud qui circule à travers le mélangeur (15).

8. Procédé de fonctionnement d'une turbine à gaz comprenant un ensemble de chambre de combustion (5), ayant une pluralité d'unités de chambres de combustion (8) tubulaires, dans lequel chaque unité de chambre de combustion (8) comprend une chambre de combustion de premier étage (12) et une chambre de combustion de deuxième étage (13), qui définissent un trajet de gaz chaud (14), et un mélangeur (15), prévu le long du trajet de gaz chaud (14) entre la chambre de combustion de premier étage (12) et la chambre de combustion de deuxième étage (13) ;

le procédé comprenant :

la détection de premières températures (ST1a, ..., STNa) du gaz chaud qui circule à travers le mélangeur (15) de chaque unité de combustion (8) à un premier emplacement respectif (17a) ;

la détection de deuxièmes températures (ST1b, ..., STNb) du gaz chaud qui circule à travers le mélangeur (15) de chaque unité de chambre de combustion (8) à un deuxième emplacement respectif (17b) ;

le calcul d'une première température moyenne (META) d'un premier groupe (Sa) des premières mesures de température (ST1a, ..., STNa) et d'une deuxième température moyenne (METb) d'un deuxième groupe (Sb) des deuxièmes mesures de température (ST1b, ..., STNb) ; et

la détermination d'une commande de température de sortie de mélangeur (METC) en fonction de la première température moyenne (META) et de la deuxième température moyenne (METb) ;

**caractérisé en ce que** les premières mesures de température les plus élevées (ST1a, ..., STNa) et les premières mesures de température les plus basses (ST1a, ..., STNa) sont exclues du premier groupe (Sa) et les deuxièmes mesures de température les plus élevées (ST1b, ..., STNb) et les deuxièmes mesures de température les plus basses (ST1b, ..., STNb) sont exclues du deuxième groupe (Sb) ;

et **en ce que**, dans chaque unité de chambre de combustion (8), le premier capteur de température (17a) et le deuxième capteur de température (17b) se trouvent au niveau d'une sortie du mélangeur (15).

9. Procédé selon la revendication 8, comprenant l'exclusion d'un premier nombre (NHa) des premières mesures de température les plus élevées (ST1a, ..., STNa) et d'un deuxième nombre (NLa) des premières mesures de température les plus basses (ST1a, ..., STNa) du premier groupe (Sa) et l'exclusion d'un troisième nombre (NHb) des deuxièmes mesures de température les plus élevées (ST1b, ..., STNb) et d'un quatrième nombre (NLb) des deuxièmes mesures de température les plus basses (ST1b, ..., STNb) du deuxième groupe (Sb).

10. Procédé selon la revendication 9, dans lequel le premier nombre (Nha) des premières mesures de température les plus élevées (ST1a, ..., STNa) est égal au troisième nombre (NHb) des deuxièmes mesures de température les plus élevées (ST1b, ..., STNb) et le deuxième nombre (NLa) des premières mesures de température les plus basses (ST1a, ..., STNa) est égal au quatrième nombre (NLb) des deuxièmes mesures de température les plus basses (ST1b, ..., STNb).

11. Procédé selon l'une quelconque des revendications 8 à 10, dans lequel la commande de température de sortie (METC) est déterminée comme :

$$METC = K1 + K2*META + K3*METb$$

où METC est la commande de température de sortie, META est la première température moyenne, METb est la deuxième température moyenne et K1, K2 et K3 sont des coefficients de calibrage.

12. Procédé selon l'une quelconque des revendications 8 à 11, dans lequel, dans chaque unité de chambre de combustion (8), le premier emplacement du premier capteur de température (17a) et le deuxième emplacement du deuxième capteur de température (17b) comportent un premier emplacement angulaire et un deuxième emplacement angulaire, respectivement, et, de préférence, le premier emplacement angulaire est diamétralement opposé au deuxième emplacement angulaire.

STa1, ..., STaN

STb1, ..., STbN

CONTROL
UNIT

FIG.1

FIG.2

FIG. 3

FIG. 4

FIG. 5

STak

STbk

17a

17b

15

20

CONTROL UNIT

STa1

STa2

STaN

STb1

STb2

STbN

METC

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140144156 A1